# EUROPEAN PATENT APPLICATION

(11) **EP 0 529 633 A2**
(43) Date of publication of application: **03.03.1993**
(21) Application number: 92114651.0
(22) Date of filing: 27.08.1992
(51) Int. Cl.: H04Q 11/04, H04M 3/24, H04M 1/00

(54) **DC termination circuit for 2B1Q line-coded basic rate ISDN**

(30) Priority: 29.08.1991 US 752156
(71) Applicant: TEKTRONIX, INC., Wilsonville, Oregon 97070-1000 (US)
(72) Inventor: Hammond, John A., Portland, Oregon 97213 (US); Edwards, James W., Beaverton, Oregon 97005 (US)
(74) Representative: Strasse, Joachim, Dipl.-Ing.

(57) **Abstract**

A DC termination circuit meeting the 2B1Q basic rate physical layer line code protocol for bilateral switch operation has a trigger circuit for switching the termination circuit from a high impedance to a low impedance circuit. The trigger circuit is connected in parallel with a switch that when activated effectively shorts the trigger circuit out of the DC termination circuit providing reduced power dissipation. Activation of the switch connects low impedance, low power dissipation load into the DC termination circuit. A hold-up current source is provided to maintain circuit operation during momentary losses of a test voltage. In a further embodiment of the DC termination circuit, a fold-back current limiter is included that further reduces the current through the DC termination circuit when the test voltage exceeds a predetermined value set by the 2B1Q standards.

## Description

### Background of the Invention

The present invention relates to DC termination circuits and more specifically to a DC termination circuit having a bi-lateral switch for use in telephone equipment meeting 2B1Q specifications.

Telephone companies may provide many different types of services to subscribers. These services may be analog, known as POTS (Plain Old Telephone Service) or digital of which there are numerous types. When ISDN (Integrated Services Digital Network) was first proposed, equipment manufacturers in the United States developed their own ideas for implementing two wire, full duplex, relatively high speed data communications over a local telephone loop. AT&T and Northern Telecomm each developed a priority ISDN implementation for the "U" interface reference point called AMI (Alternating Mark Inversion). These and other proposed ISDN implementations were submitted to the American National Standards Institute (ANSI), which developed its own ISDN standard for the "U" interface reference point called 2B1Q (2 Binary, 1 Quaternary Modulation). 2B1Q has now been adapted as the ISDN standard for the United States.

Each type of telephone service has a DC termination requirement. The DC termination is used, among other things, for making a low level DC current in the loop to prevent contact plating and oxidation of all the various connection points between the phone switch and the phone. Switching equipment in central offices of telephone companies have the capability of testing a subscriber's loop to determine the type of service the subscriber has, analog or digital, and if it is digital the kind of digital service it has. Metallic loop testers in the phone switch capitalize on the DC termination characteristics of the subscriber's equipment to determine the type of service in place. A requirement of this type of loop test is that it can be performed on unpowered subscriber's equipment.

All digital service standards have a characteristic response to a test from the central office. One of the characteristics of all digital service standards is the DC termination of the equipment being tested. In the case of the AT&T's AMI service, the DC termination or load circuit is a resistor and diode in series. The DC termination circuit in the 2B1Q service embodies a bi-lateral switch that is normally off. A sweep voltage is applied to the loop from a central office switch, which activates the DC termination circuit. Knowing that the 2B1Q DC termination is the only type of digital service that embodies a bi-lateral switch, the switch in the central office can determine the loop service is 2B1Q by the response from the loop.

Conventional circuits have been designed to implement the 2B1Q standard, but have used physically large components due to the high power dissipation of the circuit designs. What is needed is a DC termination circuit that meets the 2B1Q standard for termination response while at the same time minimizing the power dissipated by the circuit.

### Summary of the Invention

Accordingly the present invention is a DC termination circuit for implementing the 2B1Q standard for ISDN basic rate physical layer line code protocol having a full-wave bridge rectifier for receiving a DC voltage from an external signal source and generating a constant polarity DC output voltage. A hold-up current source is coupled to the output of the bridge rectifier for maintaining circuit operation during momentary loss of the externally applied voltage. A trigger circuit is coupled to receive the DC voltage for coupling a low DC impedance, low power dissipation load to the external signal source. A current sink is coupled to the trigger circuit and the output of the bridge rectifier for providing the low DC impedance, low power dissipation load to the external signal source.

A further embodiment of the present invention provides a means for further reducing the power dissipation by the low impedance load as a function of externally applied DC voltage increasing beyond a predetermined value.

The objects, advantages and novel features of the present invention are apparent from the following detailed description when read in conjunction with appended claims and attached drawings.

### Brief description of the Drawings

Fig. 1 is a block diagram of the circuit for producing 2B1Q termination characteristics according to the present invention.

Fig. 2 is a block diagram of the circuit for producing 2B1Q termination characteristics in response to an externally applied voltage from a phone switch according to the present invention.

Fig. 3 is a schematic diagram of the circuit for producing 2B1Q termination characteristics in response to an externally applied voltage from a phone switch according to the present invention.

Fig. 4 is a current vs voltage template showing the parameters for a 2B1Q DC termination circuit.

Fig. 5 is a block diagram of a further embodiment of the DC termination circuit according to the present invention.

Fig. 6 is a schematic diagram of the further embodiment of the DC termination circuit according to the present invention.

### Detailed Description of the Preferred Embodiment

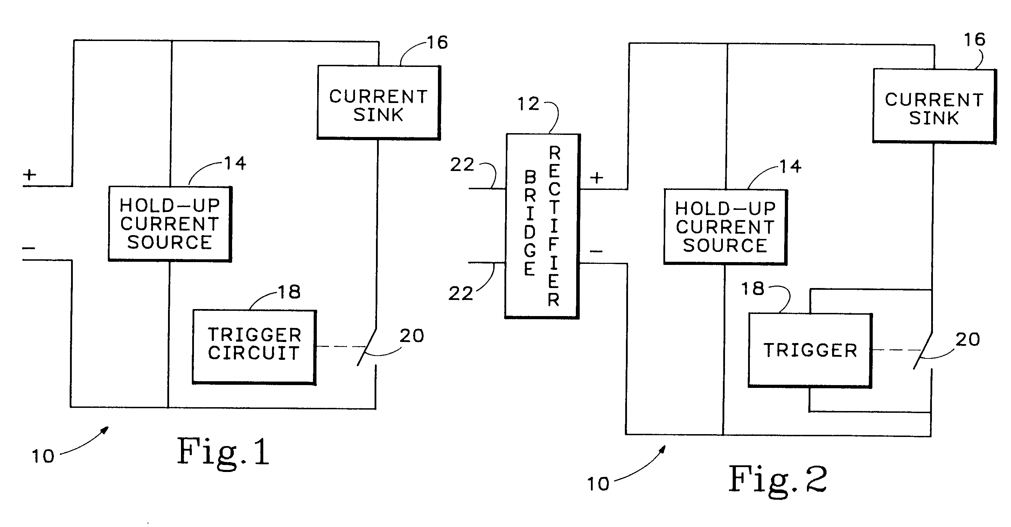

Referring to Fig. 1, there is shown a block diagram of a circuit 10 for producing 2B1Q termination characteristics. A variable direct current, DC, voltage from an external signal source, not shown, having a constant polarity is applied to a hold-up current source 14. The variable DC voltage is also applied to a current sink 16 and a trigger circuit 18. The trigger circuit 18 includes a switch 20 connected in parallel with the trigger circuit 18. The trigger circuit 18 produces a trigger signal that activates switch 20 when the variable DC voltage reaches a predetermined threshold value. With switch 20 closed, the current sink presents a low DC impedance, low power dissipation load to the external signal source. The closing of switch 20 also effectively shunts the trigger circuit 18 from the external signal source. Alternately, the trigger circuit 18 may be connected in parallel with the series connected current sink 16 and switch 20, but power dissipation will be higher.

The block diagram of Fig. 2 shows the DC termination circuit 10 for implementing the 2B1Q standard for ISDN basic rate physical layer line code protocol, ANSI specification T1.601/1988 (draft revision 1/9/1991). A DC voltage from a telephone company central office phone switch, acting as the external signal source, is applied to input terminals 22 of a bridge rectifier 12. The polarity of the DC voltage from the phone switch may be reversed and the bridge rectifier 12 is able to respond to the different polarity of DC voltage and generate a constant polarity output voltage. A hold-up current source 14 is coupled to the output of the bridge rectifier 12 for maintaining circuit operation during momentary loss of the externally applied DC voltage. A current sink 16 and trigger circuit 18 are series connected to the output of the bridge rectifier 12 and connected in parallel with the hold-up current source 14. A shunt switch 20 is connected in parallel across the trigger circuit 18.

The DC termination circuit 10 acts as a bilateral switch. In the OFF state the circuit 10 presents a high impedance to the central office switch while in the ON state it presents a low impedance. In the preferred embodiment, the impedance in the OFF state is in megohms as opposed to an impedance of thousands of ohms in the ON state. A ramping DC voltage is applied to terminals 22 of the bridge rectifier 12 from a central office switch during a loop test. The bridge rectifier 12 receives the DC voltage and generates a constant polarity output voltage. The voltage output from the bridge rectifier 12 is coupled to the hold-up current source 14, the current sink 16, and the trigger circuit 18. When the ramping voltage reaches the threshold voltage of the trigger circuit 18, the trigger circuit 18 turns on closing switch 20. This effectively shorts the trigger circuit 18 from the DC termination circuit 10 while at the same time coupling the low impedance current sink 16 into the circuit 10. Shorting the trigger circuit 18 from circuit 10 during the ON state reduces the amount of power dissipated by the DC termination circuit 10. Once switch 20 is closed any momentary loss of the input DC voltage is compensated for by the hold-up current source 14. As the input voltage increases, current through the current sink 16 increases by only a very small amount causing the power dissipated by the circuit to increase only as a function of the input voltage. As the voltage deceases below a predetermined value the current through the current sink 16 starts to drop. When the current drops below a predetermined value, the trigger circuit 18 turns off and the switch 20 opens, thus placing the DC termination circuit 10 in its preactivation high impedance mode.

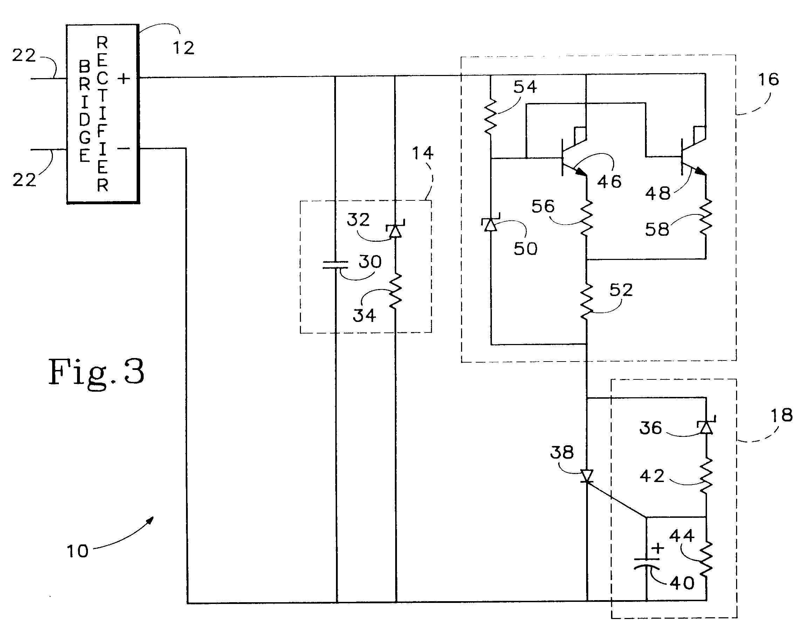

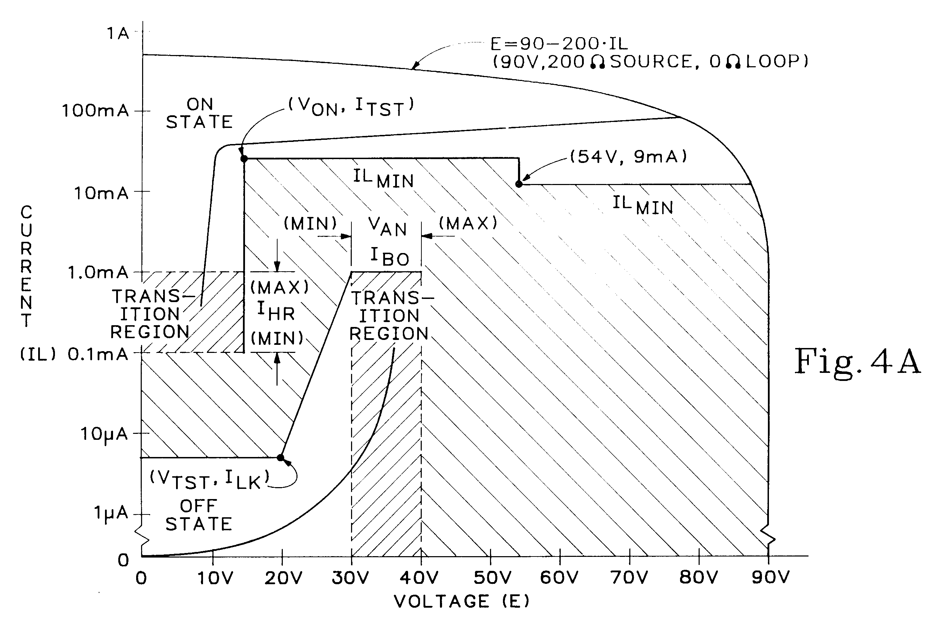

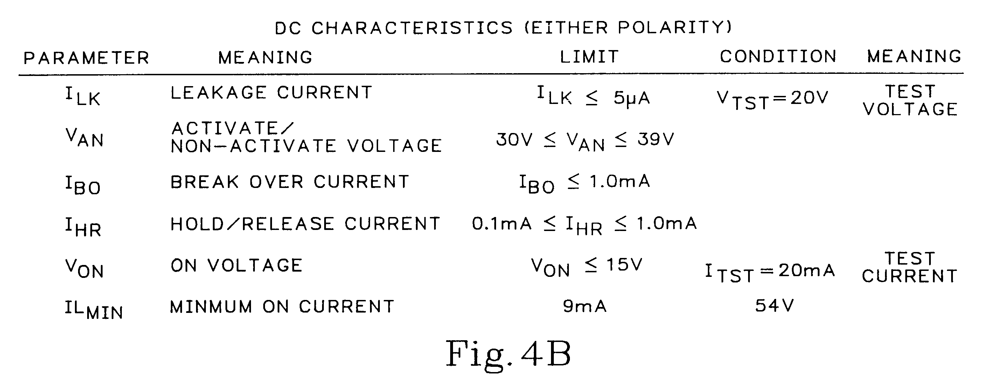

The 2B1Q DC termination circuit 10 is described in greater detail in relation to the schematic diagram of Fig. 3 and the template of Fig. 4 showing current vs voltage levels for 2B1Q DC termination circuits. The scale for the current value IL is logarithmic and the voltage scale is linear. The template shows that in the OFF state the leakage current I_{LK} is less than or equal to 5 microamps for voltages less than 20 volts and less than or equal to 1 milliamp while the voltage across the DC termination circuit 10 is less than the active/non-active voltage V_{AN}. The DC termination circuit 10 transitions to the ON state when the active/non-active voltage V_{AN} is between 30 and 39 volts. Activation time for V_{AN} is in the range of 3 to 50 milliseconds. The transition from the OFF state to the ON state must be completed within 50 milliseconds from the point where the applied voltage across the DC termination circuit 10 first exceeds V_{AN}. Application of a voltage greater than V_{AN} for a duration of less than 3 milliseconds does not transition the DC termination circuit 10 to the ON state. While in the ON state, when the voltage across the DC termination circuit 10 is 15 volts, the current is greater than or equal to 20 milliamps. The termination circuit 10 remains in the ON state as long as the current is greater than the threshold hold/release current I_{HR} whose value is in the range of .1 to 1 milliamps. Application of 90 volts through 200 to 400 ohms for a maximum duration of 2 seconds results in a current greater than 9 milliamps.

The DC termination circuit 10 transitions to the OFF state when the current falls below the threshold hold/release current I_{HR} for a duration greater than the guaranteed release time of 100 milliseconds. The transition from the ON state to the OFF state is completed within 100 milliseconds from the point where the current first falls below I_{HR}. The DC termination circuit 10 does not transition to the OFF state when the current falls below I_{HR} for less than 3 milliseconds.

The bridge rectifier 12, shown in Fig. 3, receives the test voltage from the central office switch, not shown, and provides a polarity guard function, assuring proper application of the test voltage to the rest of the circuit 10. Capacitor 30 coupled to the output of the bridge rectifier 12 charges to the applied voltage to provide a temporary energy source in the case of a momentary loss of the test voltage. Zener diode 32 having a breakdown voltage of 22 volts and series connected resistor 34 are coupled in parallel with the capacitor 30 to provide a discharge path for the capacitor 30 when subjected to the application of an invalid test voltage or other foreign test voltage. As the test voltage increases beyond the threshold voltage of the trigger circuit 18, in this case 30 volts, zener diode 36 starts conducting in the reverse breakdown mode. The current through the zener diode 36 activates silicon controlled rectifier (SCR) 38 acting as a switch. With SCR 38 latched on, the trigger circuit 18 is effectively shorted out of the DC termination circuit 10. Capacitor 40 and the voltage divider made of resistors 42 and 44 on the gate of SCR 38 prevent false or early triggering of the trigger circuit 18. Resistors 42 and 44 are also used to set the trigger voltage at some point above the zener 36 breakover voltage and to program the hold/release current I_{HR}.

With SCR 38 latched, current sink 16 made of transistors 46 and 48 is activated maintaining a minimum constant current therethrough as required by the ANSI T1.601-1988 specifications. A single bi-polar transistor with higher power dissipation may equally be used in the current sink 16 instead of the two transistors 46 and 48 shown. The minimum constant current through transistors 46 and 48 is defined by zener diode 50 and resistor 52. Zener diode 50 has a breakdown voltage of 6.2 volts and effectively clamps the voltage across resistor 52 at this value less the diode drop of the base-emitter junction of the transistors 46 and 48. Resistor 54 is connected between the + terminal of the bridge rectifier 12 and the bases of transistors 46 and 48 to provide biasing current to the bases of transistors 46 and 48. Ballast resistors 56 and 58 are connected between the respective emitters of transistors 46 and 48 and resistor 52 to ensure that the transistors 46 and 48 share power equally. The values of resistors 56 and 58 are selected to be very small in comparison to resistor 52 so that zener diode 50 and resistor 52 set the current.

The application of a test voltage from a central office switch causes capacitor 30 to start charging. As previously stated, the specification calls for a DC leakage current in the OFF state of less than or equal to 5 microamps for steady state voltages of less than or equal to 20 volts. Above 20 volts in the OFF state the DC leakage current may not exceed 1 milliamp. Zener diode 32 breaks down at 22 volts establishing a current path through the zener 32 and resistor 34 providing a discharge path for capacitor 30 while the DC termination circuit 10 is in the OFF state. When the test voltage reaches 30 volts, zener diode 36 in the trigger circuit 18 breaks down causing current to flow in SCR gate 38. In the preferred embodiment, it takes approximately 200 microamps of current through SCR 38 to activate it. The input voltage at this point is approximately 32-33 volts. With SCR 38 latched on, current flows through current sink 16 placing the DC termination circuit in the ON state. While in the ON state the DC termination circuit 10 acts as a low impedance load to the test voltage. When the DC termination circuit 10 switches to the ON state the test voltage may drop down to a lower voltage. The 2B1Q specification states that in the ON state the current must be greater than or equal to 20 milliamps for a voltage of 15 volts. Zener diode 50 breaks down at 6.2 volts and effectively clamps the voltage across resistor 52 at 6.2 volts less the diode drop of base-emitter junctions of transistors 46 and 48. The value of resistor 52 is selected to meet the 20 milliamp/15 volts specification. Further increases in the test voltage will produce very little change in the current flow through current sink 16.

As the test voltage decreases, there comes a point when the current through the current sink starts to drop. When the current reaches the release current I_{HR} defined as being between .1 and 1 milliamp, the SCR gate 38 shuts off and the DC termination circuit transitions to the OFF state. Capacitor 30 acts as a hold-up current source for I_{HR} in the transition region in case the test voltage momentarily drops due to noise or the like.

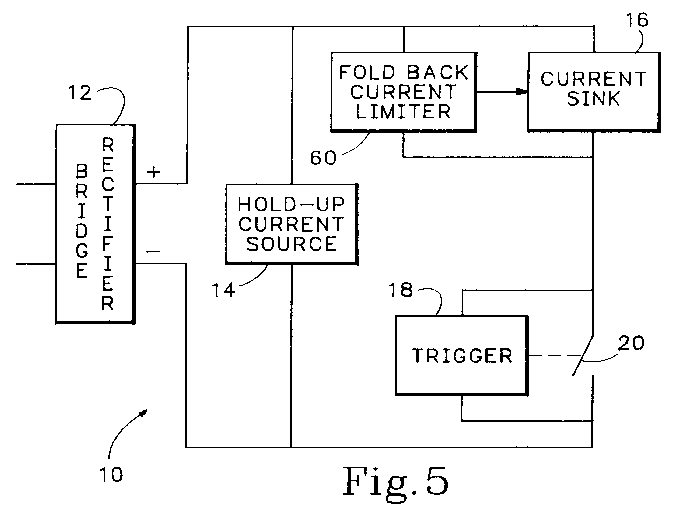

Referring to Fig. 5, there is shown a block diagram of a further embodiment of the DC termination circuit 10 of the present invention. Referring back to the template of Fig. 4, it shows that above 54 volts the current is greater than 9 milliamps. It further shows that at voltages below 54 volts the minimum current through the current sink 20 milliamps. Since the power dissipated by the circuit is a function of the amount of current flowing in it, it is desirable to reduce the current through the circuit to the minimum allowable under the 2B1Q specifications to further reduce power dissipated by the DC termination circuit 10. This is accomplished by adding a fold-back current limiter 60 to the DC termination circuit 10. As the voltage increases past 54 volts, the fold-back current limiter 60 effectively shuts off the current sink 16 and provides an alternate current path in the DC termination circuit 10 that generates a current of at least 9 milliamps.

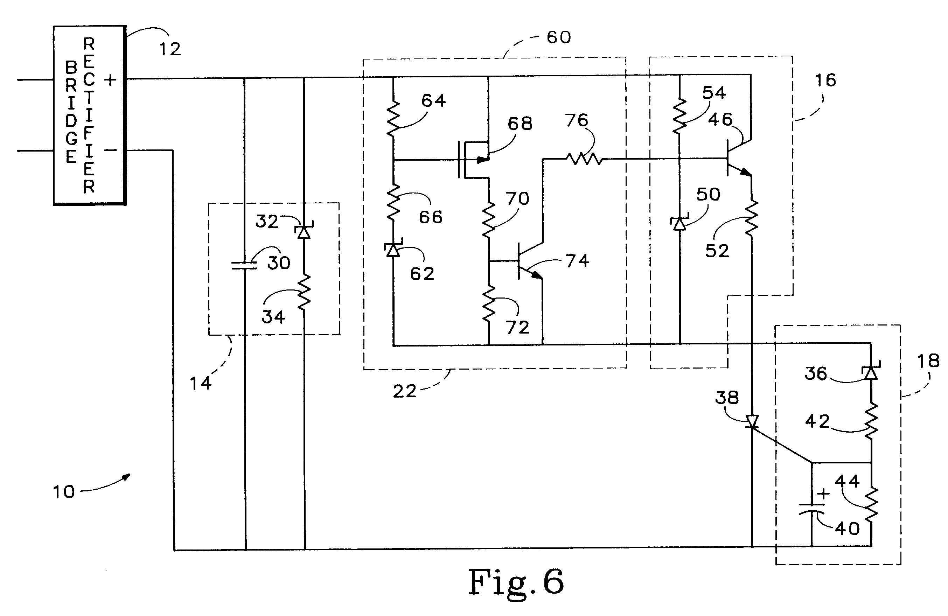

The schematic diagram of Fig. 6, where like elements of the previous schematic diagram are the same, shows the fold-back current limiter 60. Below 54 volts the circuit operates as previously described with the fold-back current limiter shut off. As the test voltage passes 51 volts zener diode 62 breaks down and starts conducting. A voltage divider made of resistors 64 and 66 provide a voltage bias to the gate of field effect transistor (FET) 68. At approximately 54 volts the voltage bias on the gate of FET 68 is large enough to cause FET 68 to conduct. With FET 68 conducting, a voltage divider network is established by resistors 70 and 72. A bias current is provided to the base of transistor 74 by the voltage divider network, which causes transistor 74 to conduct. With transistor 74 conducting, a current path is established through transistor 74 and resistors 76 and 54 for drawing current away from the base of the current sink transistor 46 and zener diode 50, which shut down. The majority of current flows through resistor 70 providing at least 9 milliamps but less than 20 milliamps of current for the DC termination circuit 10 when the test voltage equals or exceeds 54 volts.

When the test voltage decreases below 54 volts, FET 68 shuts off, which shuts off transistor 74. With transistor 74 shut off, current again flows into the base of transistor 46 and through zener 50, which begin to conduct and reestablish the constant current through the current sink 16.

A DC termination circuit has been described that implements the new U.S. standard for ISDN basic rate physical layer line code protocol 2B1Q voltage/current specifications. The DC termination functions as a bilateral switch that presents a high impedance load to a signal source in the OFF state and a low impedance load in the ON state. The DC termination circuit has a bridge rectifier that provides a constant polarity DC output to the DC termination circuit. A hold-up current source is connected to the output of the bridge rectifier to maintain circuit operation during momentary losses of the test signal. A trigger circuit is provided that triggers a switch when the test voltage passes a threshold voltage level. The switch is in parallel with the trigger circuit so that when the switch is activated, the trigger circuit is effectively shorted out of the circuit. Activation of the switch connects a low impedance, low power dissipation constant current sink to the DC termination circuit. A further embodiment of the invention is a fold-back current limiter that shuts of the current sink and reduces the amount of current flowing through the DC termination circuit. These and other aspects of the present invention are set forth in the appended claims.

## Claims

1. A circuit (10) for producing 2B1Q termination characteristics in response to a variable DC voltage from an external signal source comprising:
a current sink (16) for providing the low impedance, low power dissipation load to the external signal source;
a trigger circuit (18) receiving the variable DC voltage from the external signal source for coupling the current sink to the external signal source at a predetermined DC voltage threshold level; and
means for maintaining circuit (14) operation during momentary losses of the variable DC voltage from the external signal source.

2. The circuit as recited in claim 1 further comprising a bridge rectifier (12) coupled to receive the variable DC voltage from an external signal source and generating a variable DC output voltage having a constant polarity, the output of the bridge rectifier being coupled to the current sink (16), trigger circuit (18), and the maintaining means (14).

3. The circuit as recited in claim 1 further comprising a means for reducing the power dissipated in the circuit (60) as the variable DC voltage from the external signal source increases past another voltage threshold level, the power reducing means (60) providing an alternate low impedance, low power dissipation load to the external signal source while disconnecting the current sink (16) from the external signal source.

4. The circuit as recited in claim 1 wherein the trigger circuit (18) further comprises a switch (20) connected in parallel with the trigger circuit (18) and in series with the current sink (16), the switch (20) receiving a signal from the trigger circuit (18) at the predetermined DC voltage level for coupling the current sink (16) to external signal source and shunting the trigger circuit (18) from the external signal source.

5. A circuit for producing 2B1Q termination characteristics in response to a variable DC voltage from an external signal source comprising:
a bridge rectifier (12) receiving the variable DC voltage from the external signal source and generating a variable DC output voltage having a constant polarity;
a hold-up current source (14) coupled to the output of the bridge rectifier for maintaining circuit operation during momentary losses of the variable DC voltage from the external signal source;
a trigger circuit (18) coupled to receive the variable DC voltage from the bridge rectifier for coupling a low impedance, low power dissipation load to the external signal source at a predetermined DC voltage threshold level; and
a current sink (16) coupled to the trigger circuit (18) circuit and the DC voltage output of the bridge rectifier (12) for providing the low impedance, low power dissipation load to the external signal source.

6. The circuit as recited in claim 5 further comprising a means for reducing the power dissipated by the circuit (60) as the variable DC voltage from the external signal source increases past another voltage threshold level, the power reducing means (60) providing an alternate low impedance, low power dissipation load to the external signal source while disconnecting the current sink (16) from the external signal source.

7. The circuit as recited in claim 5 wherein the trigger circuit (18) further comprises a switch (20) connected in parallel with the trigger circuit (18) and in series with the current sink (16), the switch (20) receiving a trigger signal from the trigger circuit (18) at the predetermined DC voltage level for coupling the current sink (16) to external signal source and shunting the trigger circuit (18) from the external signal source.

8. A circuit for producing 2B1Q termination characteristics in response to a variable DC voltage from an external signal source comprising:
a bridge rectifier (12) receiving the variable DC voltage from the external signal source and generating a variable DC output voltage having a constant polarity;
a hold-up current source (14) coupled to the output of the bridge rectifier for maintaining circuit operation during momentary losses of the variable DC voltage from the external signal source;
a trigger circuit (18) receiving the variable DC voltage from the bridge rectifier and generating a trigger signal at a predetermined DC voltage threshold level;
a current sink (16) for providing the low impedance, low power dissipation load to the external signal source;
a switch (20) connected in parallel with the trigger circuit (18) and in series with the current sink (16) receiving the trigger signal for coupling the current sink (16) to external signal source and shunting the trigger circuit (18) from the external signal source; and
a fold-back current limiter (60) providing an alternate low impedance, low power dissipation load to the external signal source as the external signal source voltage increases past another threshold voltage level, the fold-back current limiter (60) disconnecting the current sink (16) from the external signal source.
